# EUROPÄISCHE PATENTSCHRIFT

(11) **EP 2 422 167 B1**
(45) Veröffentlichungstag und Bekanntmachung des Hinweises auf die Patenterteilung: **16.01.2019**
(21) Anmeldenummer: 10716312.3
(22) Anmeldetag: 08.04.2010
(51) Int. Cl.: G01F 1/58, G01F 1/60

(54) **VERFAHREN ZUM BETREIBEN EINER MAGNETISCH-INDUKTIVEN DURCHFLUSSMESSEINRICHTUNG**
METHOD FOR THE OPERATION OF A MAGNETIC-INDUCTIVE FLOW MEASUREMENT DEVICE
PROCÉDÉ POUR FAIRE FONCTIONNER UN DÉBITMÈTRE MAGNÉTO-INDUCTIF

(30) Priorität: 21.04.2009 DE 102009002539
(43) Veröffentlichungstag der Anmeldung: 29.02.2012
(73) Patentinhaber: Endress+Hauser Flowtec AG, 4153 Reinach (CH)
(72) Erfinder: DRAHM, Wolfgang, 85435 Eding (DE); SCHMALZRIED, Frank, 85467 Neuching (DE); HEIDENBLUT, Stefan, 85356 Freising (DE)
(74) Vertreter: Andres, Angelika Maria
(86) Internationale Anmeldenummer: PCT/EP2010/054651
(87) Internationale Veröffentlichungsnummer: WO 2010/121908

(56) Entgegenhaltungen:
- EP-A1- 1 108 989
- EP-A1- 1 536 211
- DE-A1- 4 437 275
- DE-A1- 19 843 808
- DE-A1-102008 005 258
- DE-C1- 19 637 716

## Beschreibung

Die Erfindung bezieht sich auf ein Verfahren zum Betreiben einer magnetisch-induktiven Durchflussmesseinrichtung, wobei die magnetisch-induktive Durchflussmesseinrichtung ein Messrohr aufweist, welches Messrohr ein Lumen zum Führen eines zumindest geringfügig elektrisch leitfähigen Messstoffs aufweist, wobei die magnetisch-induktive Durchflussmesseinrichtung eine erste und eine zweite mit dem Messstoff elektrisch wechselwirkende Elektrode aufweist, wobei in einem ersten Diagnosebetrieb eine Eingangsspannung zwischen der ersten und der zweiten Elektrode angelegt wird, welche Eingangsspannung einen elektrischen Strom im Wesentlichen innerhalb des Lumens erzeugt.

Weiterhin bezieht sich die Erfindung auf eine magnetisch-induktive Durchflussmesseinrichtung, mit einem Messrohr, das ein Lumen zum Führen eines zumindest geringfügig elektrisch leitfähigen Messstoffs aufweist, mit einer ersten und einer zweiten Elektrode, welche erste und zweite Elektrode mit dem Messstoff elektrisch wechselwirken, wobei die erste und zweite Elektrode dazu dienen, einen elektrischen Strom im Wesentlichen innerhalb des Lumens zu erzeugen.

Magnetisch-induktive Durchflussmesseinrichtungen werden in Anlagen der Prozess- und/oder Automatisierungstechnik oftmals zur Bestimmung des Volumen- bzw. Massedurchflusses verwendet. Für die volumetrische Strömungsmessung nutzen magnetisch-induktive Durchflussmesseinrichtungen das Prinzip der elektrodynamischen Induktion aus: Senkrecht zu einem Magnetfeld bewegte Ladungsträger des Messstoffs induzieren im gleichfalls im Wesentlichen senkrecht zur Durchflussrichtung des Messstoffs und senkrecht zur Richtung des Magnetfeldes angeordneten Elektroden eine Spannung. Die in dem Messstoff induzierte und mittels der Elektroden abgegriffene Messspannung ist proportional zu der über den Querschnitt des Messrohres gemittelten Strömungsgeschwindigkeit des Messstoffs und somit zum Volumenstrom. Ist die Dichte des Messstoffs bekannt, lässt sich der Massestrom in der Rohrleitung bzw. dem Messrohr bestimmen. Die Messspannung wird üblicherweise über das Elektrodenpaar abgegriffen, das in dem Bereich des Messrohres angeordnet ist, in dem die maximale Magnetfeldstärke und folglich die maximale Messspannung zu erwarten ist. Die Elektroden sind üblicherweise galvanisch mit dem Messstoff gekoppelt; es sind jedoch auch magnetisch-induktive Durchflussmesseinrichtungen mit berührungslos kapazitiv koppelnden Elektroden bekannt.

Das Messrohr kann entweder aus einem elektrisch leitfähigen Material, z.B. Edelstahl, gefertigt sein, oder aus einem elektrisch isolierenden Material bestehen. Ist das Messrohr aus einem elektrisch leitfähigen Material gefertigt, so muss es in dem mit dem Messstoff in Kontakt kommenden Bereich mit einer Auskleidung, dem sog. Liner, aus einem elektrisch isolierenden Material ausgekleidet sein. Der Liner besteht je nach Temperatur und Messstoff beispielsweise aus einem thermoplastischen, einem duroplastischen oder einem elastomeren Kunststoff. Es sind jedoch auch magnetisch-induktive Durchflussmesseinrichtungen mit einer keramischen Auskleidung bekannt geworden.

Bei der Verwendung von messstoffberührenden Elektroden bilden sich an der Grenzfläche zwischen der Elektrode und dem durch das Messrohr fließenden Messstoff galvanische Elemente, die ein elektrochemisches Störpotential verursachen. Dieses elektrochemische Störpotential ist veränderlich und abhängig von verschiedenen sich ändernden Umgebungsbedingungen wie Temperatur, Druck, Zusammensetzung des Messstoffs, Material der Elektroden und Material des Messrohrs. Es versteht sich von selbst, dass ein sich über die Zeit änderndes elektrochemisches Potential die Messgenauigkeit einer herkömmlichen magnetisch-induktiven Durchflussmesseinrichtung negativ beeinflusst. Es sind deshalb Verfahren bekannt geworden, die diese Störsignale eliminieren. Galvanische Elemente, die ein elektrochemisches Störpotential verursachen, können auch durch einen von dem Messstoff auf den Elektroden oder auf der Auskleidung abgeschiedenen Belag entstehen. Ein solcher Belag kann zudem zu einer Verfälschung der Messwerte führen.

Aus der Offenlegungsschrift DE 102006033112 A1 ist ein Verfahren zum Betreiben eines Durchflussmessgerätes, insbesondere zur Bestimmung der elektrischen Leitfähigkeit des das Messrohr durchströmenden Messstoffs, bekannt geworden. Dafür wird eine erste Elektrode mit einem Signal in Form eines Stroms oder einer Spannung beaufschlagt und an einer zweiten Elektrode, welche nicht mit dem Signal beaufschlagt ist, Impedanzen, Ströme oder Spannungen ermittelt. Aus einem Vergleich von aktuell gemessenen Werten mit hinterlegten Werten wird die elektrische Leitfähigkeit des Messstoffs bestimmt und/oder eine Belagsbildung an den Elektroden erkannt.

Ein anderes Verfahren ist aus der EP 1536211 A1 bekannt geworden. Dort werden zur Bestimmung u.a. der elektrischen Leitfähigkeit des Messstoffs mittels einer sog. 2-Punkt- und/oder 3-Punkt-Messung gewonnene Widerstandswerte miteinander verglichen. Die 2-Punkt- bzw. 3-Punkt-Messung erfolgt dabei mittels den Messelektroden und wenigstens einer weiteren Elektrode.

Die heutzutage bekannten Verfahren weisen den Nachteil auf, dass der Messbereich zur Bestimmung der elektrischen Leitfähigkeit eines Messstoffs begrenzt ist, da durch Polarisationsvorgänge, die an den Elektroden gemessene Impedanz ab einer Leitfähigkeit von ca. 1 mS/cm stark frequenzabhängig und komplex ist.

Die genannten Polarisationseffekte treten auf, wenn ein Strom zwischen der Grenzschicht zwischen Messstoff und Elektrode fließt, da in dem Messstoff vorhandene Ladungsträger sich an der Elektrode ablagern und so die Messspannung beeinflussen.
Der Erfindung liegt daher die Aufgabe zugrunde, einen Zustand einer magnetisch-induktiven Durchflussmesseinrichtung oder eine physikalische und/oder chemische Eigenschaft des Messstoffs zuverlässiger und insbesondere auch bei elektrischen Leitfähigkeiten des Messstoffs größer als 1 mS/cm zu bestimmen.

Die Aufgabe wird durch eine magnetisch-induktive Durchflussmesseinrichtung und ein Verfahren zum Betreiben einer magnetisch-induktiven Durchflussmesseinrichtung gelöst.

Die Aufgabe wird hinsichtlich des Verfahrens erfindungsgemäß dadurch gelöst, dass die magnetisch-induktive Durchflussmesseinrichtung ferner eine dritte und eine vierte mit dem Messstoff elektrisch wechselwirkende Elektrode aufweist, dass eine im Wesentlichen aufgrund des elektrischen Stroms zwischen der dritten und der vierten Elektrode abfallende Ausgangsspannung bestimmt wird, und dass mittels der Ausgangsspannung ein Zustand der Durchflussmesseinrichtung und/oder eine chemische und/oder physikalische Eigenschaft des Messstoffs bestimmt wird.

Zusätzlich wird die Ausgangsspannung in eine Beziehung zu der Eingangsspannung und/oder der Eingangsimpedanz gebracht. Dazu kann bspw. der Quotient aus Eingangsspannung und Ausgangsspannung gebildet werden. Zudem kann mittels einer Kalibrierung ein Zusammenhang zwischen der vorgenannten Beziehung und einem Zustand der magnetisch-induktiven Durchflussmesseinrichtung und/oder einer physikalischen und/ oder chemischen Eigenschaft des Messstoffs bestimmt werden. Zusätzlich wird mittels der Beziehung ein gegebenenfalls auf einer Innenwand des Messrohrs und/oder auf der ersten, zweiten, dritten und/oder vierten Elektrode vorhandener, insbesondere von dem Messstoff abgeschiedener, Belag detektiert. Die Beziehung zwischen der Ausgangsspannung, der Eingangsspannung und/oder der Eingangsimpedanz gegenüber der Dicke des Belags kann bspw. durch eine Kalibrierung gegeben sein. Die Eingangsimpedanz wird dabei zwischen der ersten Elektrode und der zweiten Elektrode bestimmt, wobei die Eingangsimpedanz aus der zwischen der ersten und der zweiten Elektrode abfallenden Spannung und dem im Wesentlichen innerhalb des Lumens fließenden elektrischen Strom bestimmt wird.

Durch die zwischen der ersten und zweiten Elektrode angelegte Eingangsspannung, kann ein elektrischer Strom im Wesentlichen innerhalb des Lumens erzeugt werden. Zu diesem Zweck kann bspw. eine Spannung bspw. über einen Vorwiderstand an die erste Elektrode angelegt werden. Das Lumen des Messrohrs kann dabei mit bspw. einem wenigsten geringfügig elektrisch leitfähigen Messstoff gefüllt sein. Abhängig von der zwischen der ersten und zweiten Elektrode angelegten Spannung kann bspw. ein Wechselstrom oder ein pulsierender Gleichstrom erzeugt werden. Als erste und zweite Elektrode können dafür bspw. mit dem Messstoff in benetzendem Kontakt stehende Elektroden verwendet werden. Dafür können insbesondere in das Lumen des Messrohrs hineinragende Elektroden oder eine Bohrung in eine Wandung des Messrohrs abschließende Elektroden vorgesehen sein. Der elektrische Strom fließt dann bspw. entlang eines sich zwischen der ersten und zweiten Elektrode ausbildenden elektrischen Strömungsfeldes innerhalb des Lumens. Der elektrische Strom besteht bspw. aus in dem Messstoff enthaltenen Ladungsträgern. Das elektrische Strömungsfeld kann zur Beschreibung der räumlichen Verteilung des elektrischen Stroms verwendet werden. Das elektrische Strömungsfeld kann sich bspw. zwischen der ersten und der zweiten Elektrode insbesondere räumlich, mindestens aber innerhalb des Lumens des Messrohrs und auch bis in eine sich anschließende Rohrleitung erstrecken. Innerhalb dieses elektrischen Strömungsfelds, entlang welchem der elektrische Strom innerhalb des Lumens fließt, können eine dritte und vierte Elektrode, welche bspw. ebenfalls in benetzendem Kontakt mit dem Messstoff stehen oder aber zumindest elektrisch mit dem Messstoff wechselwirken, angeordnet sein. Dadurch kann die zwischen der dritten und vierten Elektrode abfallende Ausgangsspannung gemessen werden. Die Ausgangsspannung wir dabei im Wesentlichen stromlos gemessen, indem der dritten und/oder der vierten Elektrode bspw. hochohmige Widerstandselemente, wie bspw. ein Operationsverstärker, nachgeschaltet werden. Mittels dieser zwischen der dritten und der vierten Elektrode abfallenden Ausgangsspannung kann dann bspw. ein Zustand der magnetisch-induktiven Durchflussmesseinrichtung bzw. eine physikalische und/oder chemische Eigenschaft des Messstoffs bestimmt werden.

Durch das vorgeschlagene Verfahren können die durch die Polarisierung an den stromführenden Elektroden, d.h. an der ersten und der zweiten Elektrode, auftretenden Störeffekte vermieden oder zumindest verringert werden. Das erfindungsgemäße Verfahren kann bspw. durchgeführt werden, wenn der Messstoff das Messrohr durchströmt. Alternativ kann das Verfahren angewandt werden, wenn der Messstoff im Messrohr ruht, oder das Messrohr entleert, d.h. frei von dem Messstoff ist. Der Zustand der Durchflussmesseinrichtung und/oder eine chemische und/oder physikalische Eigenschaft des Messstoffs können, insbesondere mittels einer Kenngröße, rechnerisch oder aufgrund von hinterlegten Daten bestimmt werden. Zu diesem Zweck kann die magnetisch-induktive Durchflussmesseinrichtung bspw. mit einem Referenz-Messstoff kalibriert werden.

Die dabei gemessenen Werte der Ausgangsspannung können dann bspw. in einer Auswerteeinheit hinterlegt werden und mit einem Zustand der magnetisch-induktiven Durchflussmesseinrichtung oder einer chemischen und/oder physikalischen Eigenschaft des Messstoffs in Verbindung gebracht werden. Bspw. kann dadurch eine Korrosion der Elektroden oder ein Leckage des Messrohrs bestimmt werden.

In einer Ausgestaltung des Verfahrens wird die elektrische Leitfähigkeit des Messstoffs oder eine mit der elektrischen Leitfähigkeit in einem Zusammenhang stehende Größe mittels der Ausgangsspannung bestimmt. Die elektrische Leitfähigkeit kann als Prozessgröße zur Produktüberwachung, zur Prozesskontrolle, zur Bestimmung einer Konzentration einer Komponente in dem Messstoff und/oder als Diagnoseparameter, insbesondere für die Detektion von leitfähigen Belägen, insbesondere auf der Wandung des Messrohrs oder den Elektroden der magnetisch-induktiven Durchflussmesseinrichtung, verwendet werden.

Die magnetisch-induktive Durchflussmesseinrichtung kann derart kalibriert werden, dass aus der Ausgangsspannung die elektrische Leitfähigkeit des Messstoffs oder eine mit der elektrischen Leitfähigkeit in einem Zusammenhang stehende Größe bestimmt werden kann. Als Referenz-Messstoffe zur Kalibrierung können elektrisch wenigstens geringfügig leitfähige Messstoffe wie bspw. Lösungen, insbesondere Salzlösungen, unterschiedlicher Konzentration dienen. Die Kalibrierung der magnetisch-induktiven Durchflussmesseinrichtung kann dann bspw. anhand eines Referenz-Messgerätes zur Bestimmung der elektrischen Leitfähigkeit erfolgen. Dies kann bspw. durch Zuordnen der zwischen der dritten und vierten Elektrode abfallenden Ausgangsspannung zu einem Wert der elektrischen Leitfähigkeit, der bspw. mittels des Referenz-Messgerätes bestimmt wurde, erfolgen.

In einer Ausgestaltung des Verfahrens wird die zwischen der ersten Elektrode und der zweiten Elektrode angelegte Eingangsspannung, welche zum Einprägen eines im Wesentlichen konstanten elektrischen Stroms dient, bestimmt. An der ersten Elektrode kann der elektrische Strom bspw. eingeprägt, d.h. ein konstanter Wert des elektrischen Stroms aufrechterhalten werden. Die zum Einprägen des elektrischen Stroms benötigte, bspw. an der ersten Elektrode anliegende, Eingangsspannung kann zu Auswertezwecken wie bspw. zur Bestimmung eines Zustands der Durchflussmesseinrichtung und/oder einer Eigenschaft des Messstoffs gemessen werden. Der erste Diagnosebetrieb kann somit ressourcen- und insbesondere zeitsparend, insbesondere während kurzzeitiger Pausen im Messbetrieb zur Bestimmung des Masse- und/oder Volumendurchflusses, durchgeführt werden. Der erste Diagnosebetrieb kann bspw. während des Umpolens des Magnetsystems ausgeführt werden. Alternativ kann bei Messstoffen mit einer gewissen elektrischen (Mindest-) Leitfähigkeit der elektrische Strom durch das Lumen im Wesentlichen durch die zwischen der ersten und zweiten Elektrode angelegte Spannung und einen Vorwiderstand eingestellt werden. Auf eine (zusätzliche) Messung des elektrischen Stroms kann dann verzichtet werden. Dies bietet den Vorteil, dass während des ersten Diagnosebetriebs der im Wesentlichen innerhalb des Lumens fließende elektrische Strom nicht zusätzlich gemessen werden muss. Andererseits besteht die Möglichkeit eine im Wesentlichen konstante Eingangsspannung anzulegen und den elektrischen Strom zwischen der ersten und der zweiten Elektrode zu bestimmen.

Die Eingangsimpedanz kann dabei insbesondere komplex sein, wobei der Realteil der Eingangsimpedanz einem ohmschen Widerstand und der Imaginärteil einem Blindwiderstand entspricht. Dieser Blindwiderstand wird insbesondere durch ein an den stromführenden Elektroden vorliegendes elektrochemische Störpotential und daher resultierende Polarisationseffekte hervorgerufen. Die Eingangsimpedanz kann zudem auch abhängig von der Frequenz eines zwischen der ersten und der zweiten Elektrode fließenden Wechselstroms sein.

Eine weitere Kenngröße zur Bestimmung des Zustands der magnetisch-induktiven Durchflussmesseinrichtung oder einer chemischen und/oder physikalischen Eigenschaft des Messstoffs kann bspw. ein Wert der Übertragungsfunktion zwischen der Eingangs- und der Ausgangsspannung oder ein Parameter dieser Übertragungsfunktion wie bspw. Eingangs- oder Ausgangs-, Vorwärts oder Rückwärts -Impedanz oder -Admittanz sein. In einer weiteren Ausgestaltung des Verfahrens wird aus einem Vergleich zwischen der Eingangsspannung und/oder der Eingangsimpedanz und der Ausgangsspannung auf einen Zustand der magnetisch-induktiven Durchflussmesseinrichtung und/oder auf eine physikalische und/oder chemische Eigenschaft des Messstoffs rückgeschlossen. Aus dem Vergleich kann bspw. ein ggf. vorhandener, wenigstens eine der Elektroden oder den Liner wenigstens in einem Teilbereich bedeckender Belag detektiert werden und geeignete Maßnahmen, wie z.B. eine Meldung an den Benutzer, eine automatische Korrektur bspw. der Messwerte und/oder eine Reinigung der Elektroden vorgenommen werden.

Ein sich an der Wandung des Messrohrs auf dem Liner und/oder auf den Elektroden absetzender Belag, kann gegenüber dem Messstoff eine verminderte oder vergrößerte elektrische Leitfähigkeit aufweisen. Je nach Art des Belags kann die elektrische Leitfähigkeit des, insbesondere von dem Messstoff abgeschiedenen, Belags größer oder kleiner sein als die elektrische Leitfähigkeit des Messstoffs selbst. Durch die Dicke und/oder die elektrische Leitfähigkeit des Belags, kann das elektrische Strömungsfeld des im Wesentlichen innerhalb des Lumens verlaufenden elektrischen Stroms bzw. das elektrische Potential innerhalb des Lumens verformt werden. Aus der Beziehung zwischen der Eingangsspannung und/oder der Eingangsimpedanz zu der Ausgangsspannung kann ein ggf. vorhandener Belag, insbesondere die Dicke des Belags, daher detektiert werden. Die mittels der Beziehung erhaltenen Werte können zu Auswertezwecken bspw. mit hinterlegten Werten verglichen werden.

In einer Ausgestaltung des Verfahrens werden eine Dicke des Belags und/oder ein Verhältnis zwischen der Leitfähigkeit des Messstoffs und der Leitfähigkeit des Belags, insbesondere mittels der Beziehung, bestimmt.

In einer Weiterbildung des Verfahrens wird mindestens ein mittels der Beziehung erhaltener Wert mit mindestens einem hinterlegten Wert verglichen. Die Detektion eines geg. vorhandenen Belags kann durch einen Vergleich von gemessenen oder berechneten Werten der Eingangsspannung und/oder Eingangsimpedanz und der Ausgangsspannung bestimmt werden.
In einer weiteren Ausgestaltung des Verfahrens wird die elektrische Leitfähigkeit des Messstoffs und/oder die elektrische Leitfähigkeit des Belags bestimmt. Bei geeigneter Kalibrierung kann aus den gemessenen oder berechneten Werten die elektrische Leitfähigkeit des Belags und des Messstoffs bzw. ein Verhältnis zwischen der elektrischen Leitfähigkeit des Belags und des Messstoffs bestimmt werden.

In einer Ausführungsart des Verfahrens wird die erste, zweite, dritte und vierte Elektrode in einem Messbetrieb zur Messstoffüberwachung und/oder zur Bestimmung des Durchflusses und/oder zur Bestimmung eines Referenzpotentials verwendet.

In einer weiteren Ausführungsart des Verfahrens wird zur Bestimmung des Durchflusses mittels eines Magnetsystems ein Magnetfeld erzeugt, durch welches Magnetfeld eine Messspannung in dem das Messrohr durchströmenden Messstoff induziert wird, welche Messspannung mittels der ersten, zweiten, dritten und/oder vierten Elektrode abgegriffen wird. Als erste, zweite, dritte und vierte Elektrode, d.h. als Elektroden zur Durchführung des Verfahrens können die ohnehin in einem magnetisch-induktiven Durchflussmessgerät vorhandenen Elektroden verwendet werden. Dabei kann es sich bspw. um eine Messstoffüberwachungselektrode, zur Erkennung teilgefüllter Messrohre, um eine Referenzelektrode, zur Bestimmung eines Referenzpotentials, oder um wenigstens eine der Messelektroden zur Bestimmung einer in dem Messstoff induzierten Spannung handeln.

In einer weiteren Ausführungsart des Verfahrens werden von der Durchflussmesseinrichtung erzeugte Messwerte abhängig von dem in dem ersten Diagnosebetrieb ermittelten Verhältnis zwischen der elektrischen Leitfähigkeit des Messstoffs und der elektrischen Leitfähigkeit des Belags, sowie abhängig von der Dicke des Belags berichtigt. Dadurch kann der Einfluss des ggf. vorhandenen Belags auf die induzierte Messspannung und die Querschnittsfläche des Messrohrs korrigiert werden.
In einer Variante des Verfahrens wird in einem zweiten Diagnosebetrieb die elektrische Leitfähigkeit des Messstoffs oder die mit der elektrischen Leitfähigkeit in einem Zusammenhang stehende Größe lediglich mittels der Eingangsspannung und/oder der Eingangsimpedanz bestimmt. In dem zweiten Betriebsmodus, der bspw. von einem Benutzer eingestellt werden kann, wird die elektrische Leitfähigkeit oder eine mit der elektrischen Leitfähigkeit in einem Zusammenhang stehende Größe nur aus der Eingangsimpedanz und/oder der Eingangsspannung bestimmt. In Abhängigkeit der elektrischen Leitfähigkeit des Messstoffs kann so der erste oder zweite Diagnosebetrieb ausgewählt werden, der den Anforderungen nach Genauigkeit und Präzision bei der Bestimmung der elektrischen Leitfähigkeit des Messstoffs genügt. Das Forcieren des elektrischen Stroms zwischen der ersten und der zweiten Elektrode ist auch abhängig von der elektrischen Leitfähigkeit des Messstoffs und insbesondere bei elektrischen Leitfähigkeiten unterhalb 1 mS/cm erforderlich. Zudem ist es bei Messstoffen mit einer elektrischen Leitfähigkeit unterhalb einer elektrischen (Mindest-) Leitfähigkeit, wie bereits erwähnt, erforderlich den elektrischen Strom mittels einer Stromquelle zu erzeugen. Dies erfordert eine gesonderte Messung des elektrischen Stroms. Das Einspeisen und Messen des elektrischen Stroms und die Messung der zwischen der dritten und vierten Elektrode abfallenden Ausgangsspannung erfordert aber einen gewissen Zeitaufwand, so dass es, insbesondere aus Gründen der Zeitersparnis, vorteilhaft sein kann, lediglich den eingespeisten elektrischen Strom und die Eingangsspannung zu messen, um bspw. die elektrische Leitfähigkeit des Messstoffs zu bestimmen. Dadurch kann der Messbetrieb ungestört fortgesetzt werden.

Die Erfindung wird anhand der nachfolgenden Zeichnungen näher erläutert. Es zeigt:
Fig. 1: eine schematische Darstellung einer magnetisch-induktiven Durchflussmesseinrichtung,
Fig. 2: eine schematische Darstellung des elektrischen Strömungsfeldes zwischen einer ersten Elektrode und einer zweiten Elektrode,
Fig. 3: ein Ersatzschaltbild einer magnetisch-induktiven Durchflussmesseinrichtung in einem ersten Diagnosebetrieb,
Fig. 4: ein weiteres Ersatzschaltbild einer magnetisch-induktiven Durchflussmesseinrichtung,
Fig. 5 a): eine graphische Darstellung des Betrags der Eingangsimpedanz als Funktion der (Wechselstrom-)Frequenz,

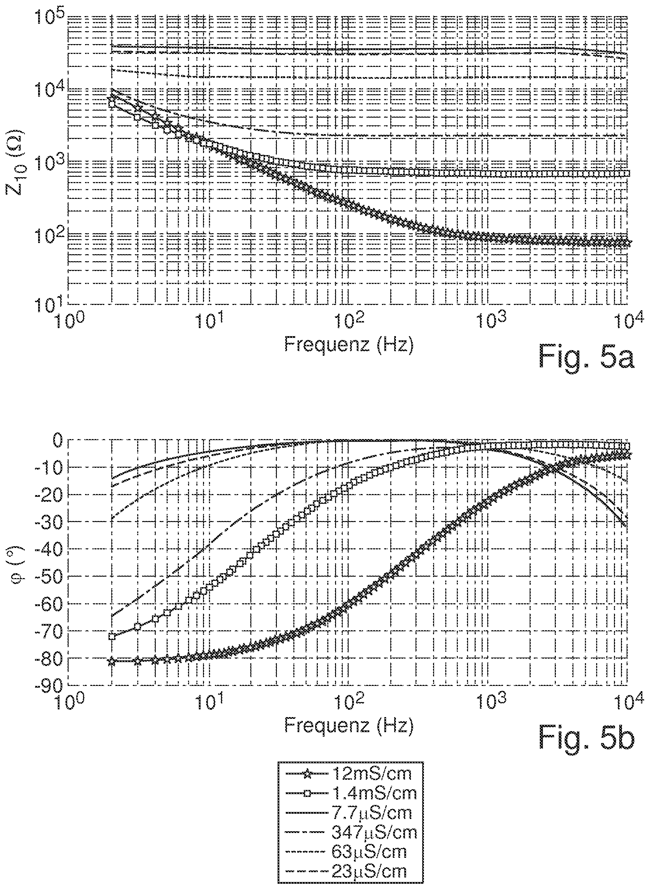

Fig. 5 b): eine graphische Darstellung der Phase der Eingangsimpedanz als Funktion der Frequenz eines zwischen der ersten und der zweiten Elektrode fließenden Wechselstroms,

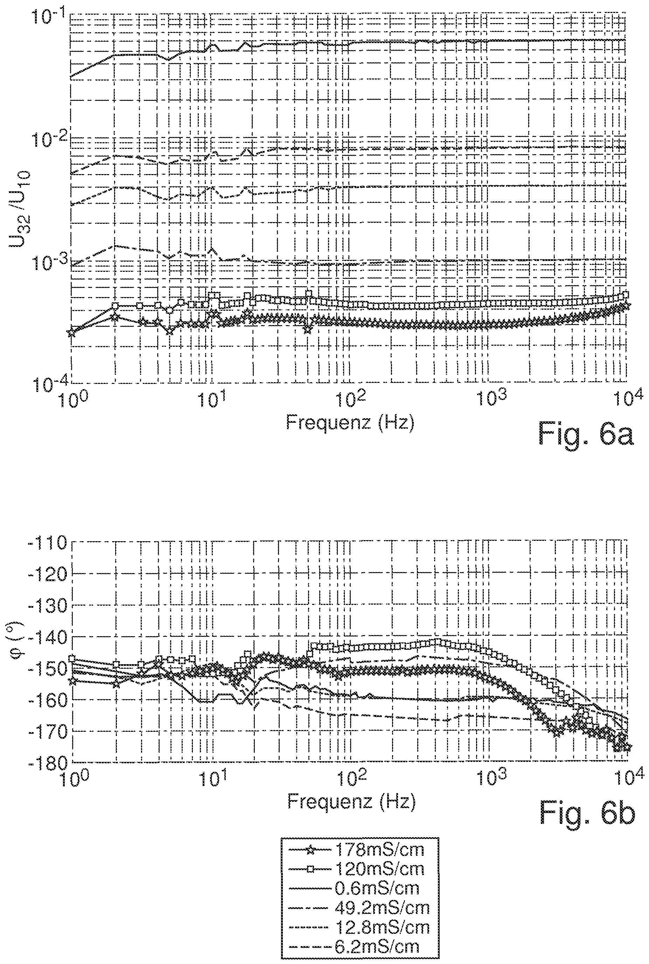

Fig. 6 a): eine graphische Darstellung der Übertragungsfunktion, welche Übertragungsfunktion aus dem Quotienten der Eingangsspannung und der zwischen der dritten und vierten Elektrode abgegriffenen Spannung gebildet wird,
Fig. 6b): eine graphische Darstellung der Phase der Übertragungsfunktion als Funktion der Frequenz eines zwischen der ersten und zweiten Elektrode fließenden Wechselstroms,

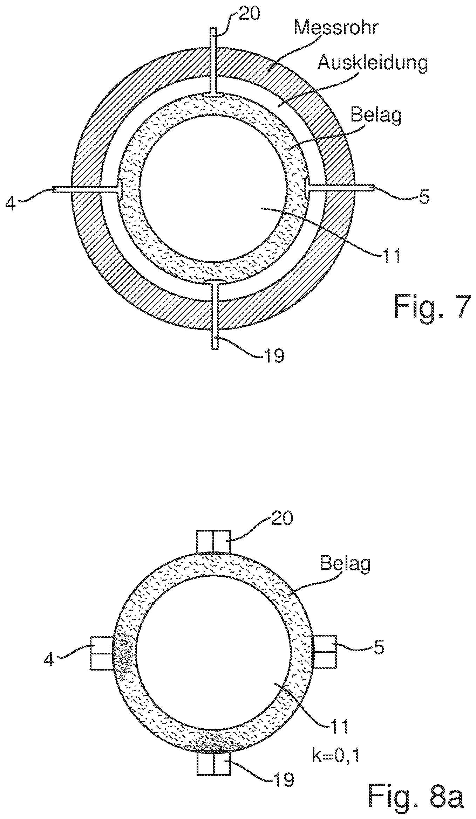

Fig. 7: eine schematische Darstellung eines Messrohrs, das einen Belag im Wesentlichen konstanter Dicke aufweist,

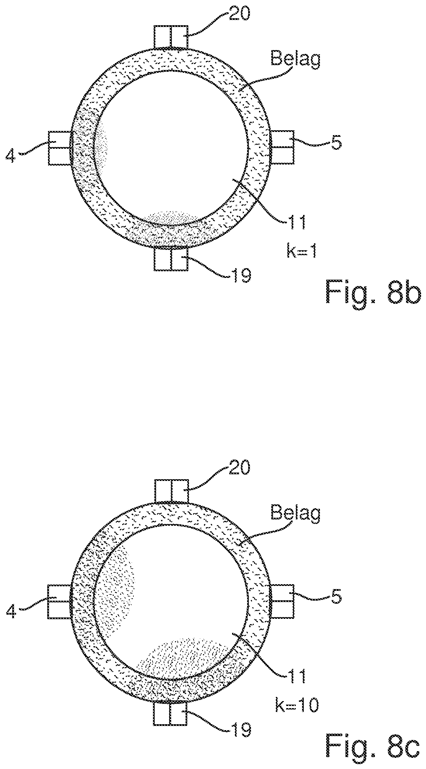

Fig. 8: a), b), c): eine schematische Darstellung der Potentialverteilung bei unterschiedlichen elektrischen Leitfähigkeiten des Belags,

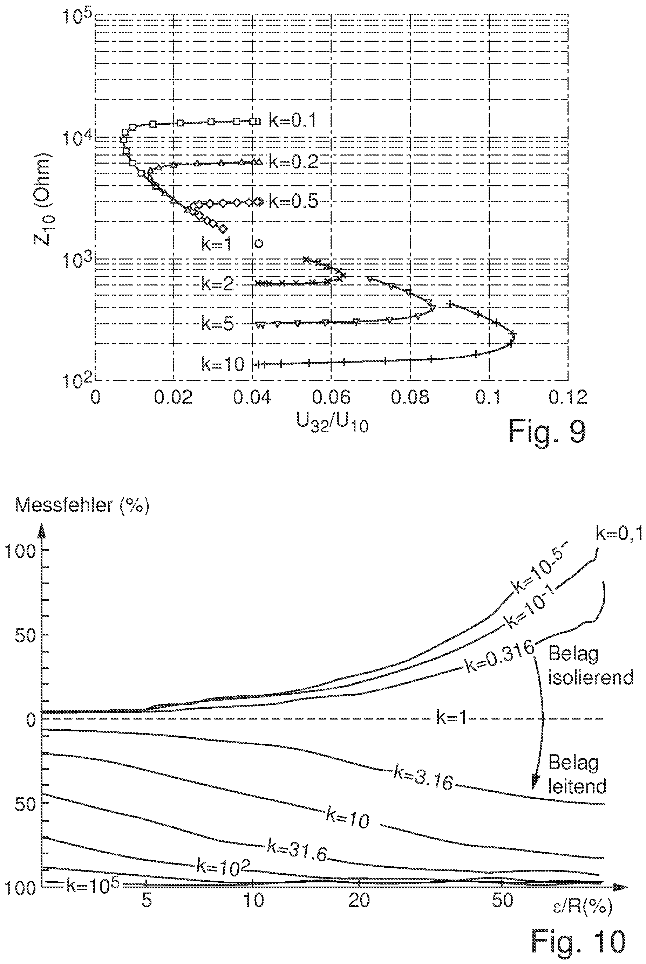

Fig. 9: eine schematische Darstellung des Verhältnisses zwischen der elektrischen Leitfähigkeit des Belags und der elektrischen Leitfähigkeit des Messstoffs bei unterschiedlicher Belagdicke, und
Fig. 10: eine graphische Darstellung des Messfehlers einer magnetisch-induktiven Durchflussmesseinrichtung in Abhängigkeit der Dicke des Belags und dem Verhältnis zwischen der elektrischen Leitfähigkeit des Messstoffs und der elektrischen Leitfähigkeit des Belags.

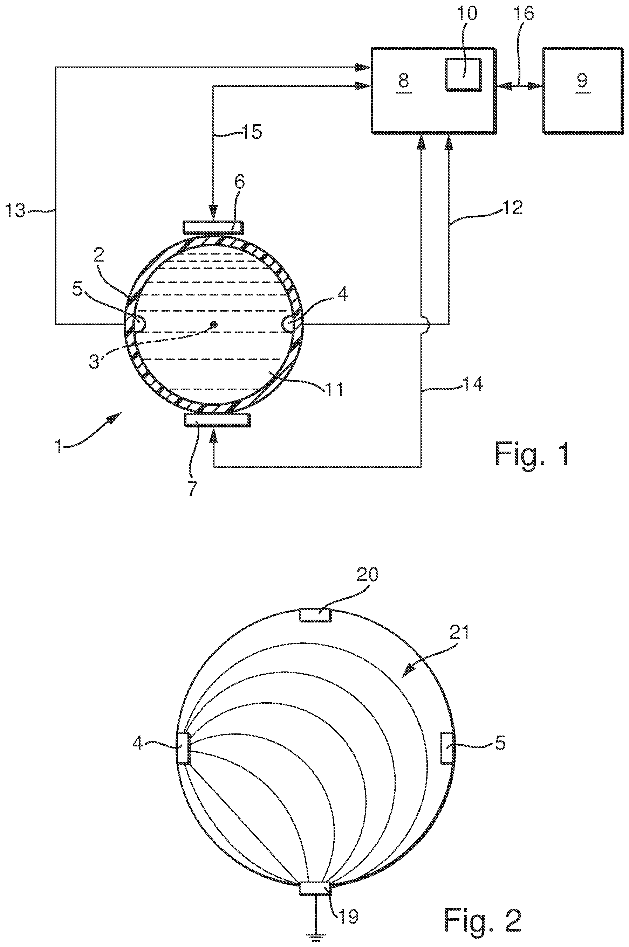

Fig. 1 zeigt eine schematische Darstellung einer magnetisch-induktiven Durchflussmesseinrichtung 1. Das Messrohr 2 wird von dem Messstoff 11 in

Richtung der Messrohrachse 3 durchflossen, wobei der Messstoff 11 zumindest geringfügig elektrisch leitfähig ist.

Das Messrohr 2 ist an seiner Innenfläche mit einem Liner ausgekleidet; der Liner besteht aus einem elektrisch isolierenden Material, das ggf. in hohem Maße chemisch und/oder mechanisch beständig ist.

Das senkrecht zur Strömungsrichtung des Messstoffs 11 ausgerichtete Magnetfeld B wird über ein Magnetsystem, z.B. über zwei diametral angeordnete Spulenanordnungen 6, 7 bzw. über zwei Elektromagnete erzeugt. Unter dem Einfluss des Magnetfeldes B wandern in dem Messstoff 11 befindliche Ladungsträger je nach Polarität zu den beiden entgegengesetzt gepolten Messelektroden 4, 5 ab. Die sich an den Messelektroden 4, 5 aufbauende Messspannung ist proportional zu der über den Querschnitt des Messrohres 2 gemittelten Strömungsgeschwindigkeit des Messstoffs 11, d. h. sie ist ein Maß für den Volumenstrom des Messstoffs 11 in dem Messrohr 2. Das Messrohr 2 ist übrigens über Verbindungselemente, z. B. Flansche mit einem Rohrsystem verbunden, durch das der Messstoff 11 hindurchströmt.

Bei den beiden Messelektroden 4, 5 handelt es sich im gezeigten Fall um pilzförmige Messelektroden, die in direktem Kontakt mit dem Messstoff 11 stehen. Selbstverständlich sind auch Stiftelektroden oder alle anderen bekannten Arten von Messelektroden einsetzbar.

Über elektrische Verbindungsleitungen 12, 13 sind die Messelektroden 4, 5 mit der Regel-/Auswerteeinheit 8 verbunden. Die Verbindung zwischen den Spulenanordnungen 6, 7 und der Regel-/Auswerteeinheit 8 erfolgt über die Verbindungsleitungen 14, 15. Die Regel-/Auswerteeinheit 8 ist über die Verbindungsleitung 16 mit einer Eingabe-/Ausgabeeinheit 9 verbunden. Der Auswerte-/Regeleinheit 8 ist die Speichereinheit 10 zugeordnet.

Um den Zusammenhang zwischen dem gemessenen Leitwert und der elektrischen Leitfähigkeit eines Messstoffs 11 herzustellen, ist es notwendig, die Geometrie der jeweiligen Messanordnung zu kennen. Die Geometrie einer Messanordnung lässt sich üblicherweise über einen konstanten Zahlenwert beschreiben, der als Zellkonstante bezeichnet wird.

In Fig. 2 ist schematisch das elektrische Strömungsfeld 21 entlang welchem der zwischen der ersten und zweiten Elektrode 4, 19 erzeugte elektrische Strom durch das Lumens fließt dargestellt. Fig. 2 zeigt dabei einen Querschnitt durch das elektrische Strömungsfeld 21 auf einer Höhe des Messrohrs 2, auf der die erste, zweite, dritte und vierte Elektrode 4, 19, 5, 20 in das Messrohr 2 eingebracht sind. Das Strömungsfeld 21 gibt dabei die räumliche Verteilung des elektrischen Stroms an. Die Flussdichte des elektrischen Strömungsfeldes 21 ist im Wesentlichen entlang der direkten Verbindungslinie zwischen der ersten und zweiten Elektrode 4, 19 am größten, und nimmt mit zunehmender Entfernung von der direkten Verbindungslinie ab. Die den Strom treibende Eingangsspannung U₁₀ liegt dabei an der ersten Elektrode 4 an, während die zweite Elektrode 19 an Masse angeschlossen bzw. geerdet ist.

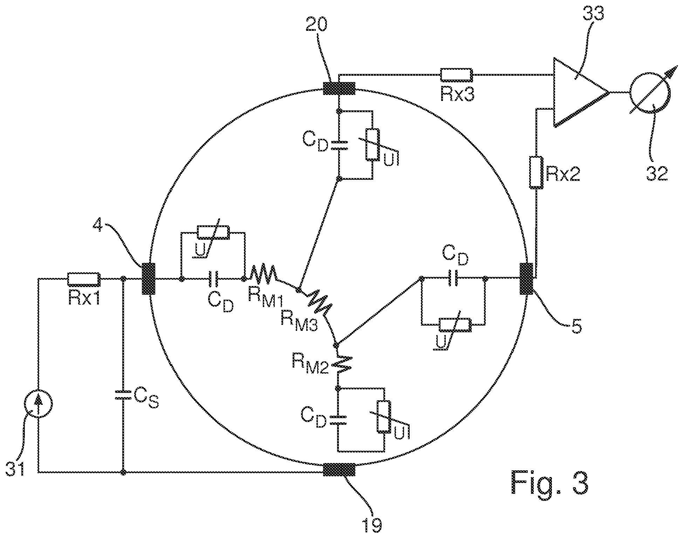

Fig. 3 zeigt ein Ersatzschaltbild einer magnetisch-induktiven Durchflussmesseinrichtung 1. Mittels einer Stromquelle 31 wird zwischen der ersten und zweiten Elektrode 4, 19 ein elektrischer Strom übertragen. Für den Fall eines Wechselstroms ergibt sich das in Fig. 3 gezeigte Ersatzschaltbild. Die erste Elektrode 4 dient während des Messbetriebs zum Abgreifen einer mittels eines Magnetsystems 6, 7 in dem Messstoff 11 induzierten Spannung. Die zweite Elektrode 19 kann im Messbetrieb bspw. als Referenzelektrode 19 verwendet werden. Die in dem der ersten und der zweiten Elektrode 4, 19 nachgeschalteten Stromkreis zwischen der ersten und zweiten Elektrode 4, 19 auftretenden parasitären Kapazitäten sind ersatzweise durch den Kondensator CS dargestellt.

An der Grenzschicht zwischen der ersten, zweiten, dritten und vierten Elektrode 4, 19, 5, 20 und dem Messstoff 11 bilden sich insbesondere aufgrund von Polarisationseffekten elektrische Doppelschichten aus, die ein kapazitives Verhalten aufweisen. Dieses kapazitive Verhalten ist ersatzweise durch einen Kondensator mit Kapazität CD dargestellt. Um einen elektrischen Strom zwischen der ersten und der zweiten Elektrode 4, 19 zu übertragen, bedarf es aufgrund der elektrischen Doppelschicht einer gewissen Mindestspannung, gekennzeichnet durch einen spannungsabhängigen Widerstand U.

Die dritte Elektrode 5 kann im Messbetrieb mit der ersten Elektrode 4 zusammenwirken und ebenso als Messelektrode 5 zum Abgreifen einer in dem Messstoff 11 induzierten Spannung verwendet werden, während die vierte Elektrode 20 im Messbetrieb bspw. als Messstoffüberwachungselektrode 20 verwendete wird. Der Spannungsabfall zwischen der dritten und der vierten Elektrode 5, 20 wird durch einen den Elektroden 5, 20 nachgeschalteten Verstärker 33 verstärkt. Aufgrund der hohen Eingangsimpedanz des Verstärkers 33 kann der über die dritte und vierte Elektrode 5, 20 fließende Strom gering gehalten werden. Die zwischen der dritten und vierten Elektrode 5, 20 im Fall eines elektrischen Strom zwischen der ersten und der zweiten Elektrode 4, 19 anliegende Ausgangsspannung U₃₂ wird daher im Wesentlichen stromlos oder zumindest so hochohmig mittels eines Spannungsmessers 32 gemessen, dass Polarisationseffekte an der dritten und vierten Elektrode 5, 20 im Wesentlichen vermieden oder zumindest verringert werden.

Der Messstoff 11 in dem Lumen des Messrohrs 2 kann als Spannungsteiler betrachtet werden, so dass die zwischen der ersten und der zweiten Elektrode 4, 19 abfallende Eingangsspannung U₁₀ und die zwischen der dritten und der vierten Elektrode 5, 20 abfallenden Ausgangsspannung U₃₂ zur Bestimmung des Widerstands R_{M3} herangezogen werden können.

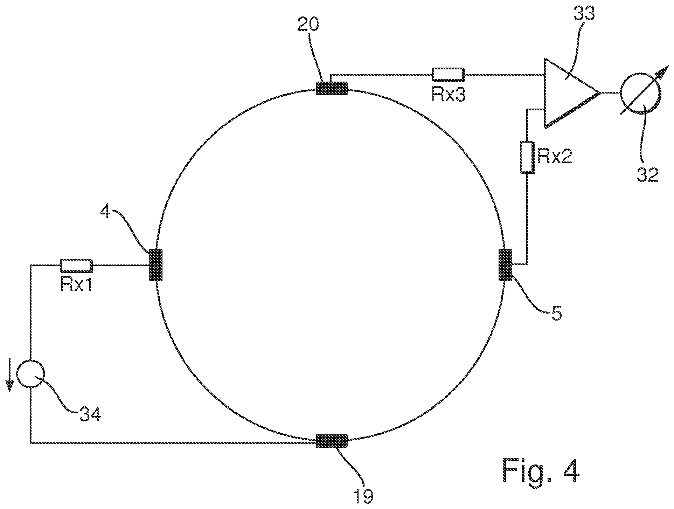

Fig. 4 zeigt ebenfalls ein Ersatzschaltbild einer magnetisch-induktiven Durchflussmesseinrichtung 1. In dieser Ausführungsform wird der elektrische Strom mittels einer Spannungsquelle 34 erzeugt. D.h. der durch das Lumen bzw. durch den in dem Lumen befindliche Messstoff 11 fließende elektrische Strom wird bei einer gewissen elektrischen (Mindest-)Leitfähigkeit des Messstoffs 11, durch die angelegte Spannung und den Widerstand Rx bestimmt, so dass auf eine Stromquelle 31 bzw. eine Spannungsquelle 34 verzichtet werden kann. Im Fall einer Stromquelle kann ein Strom eingeprägt werden, während im Fall einer Spannungsquelle der tatsächlich fließende Strom zwischen der ersten und zweiten Elektrode gemessen werden muss. Im Übrigen bleibt die Funktionsweise insbesondere im ersten Messbetrieb der in Fig. 4 gezeigten magnetisch-induktiven Durchflussmesseinrichtung 1 gegenüber der in Fig. 3 gezeigten unverändert.

Fig. 5a) zeigt den Verlauf des Betrags der Impedanz Z₁₀ zwischen der ersten und der zweiten Elektrode 4, 19. Für elektrische Leitfähigkeiten im Bereich zwischen 7,7 µS/cm und 63 µS/cm ist der Betrag der Impedanz Z₁₀ als Funktion der Frequenz der Eingangsspannung U₁₀ im Wesentlichen konstant. Steigt jedoch die elektrische Leitfähigkeit des Messstoffs 11 an, so treten zunehmend Polarisationseffekte auf. Der Betrag der Impedanz Z₁₀ bei einem Messstoff 11 mit einer elektrischen Leitfähigkeit von12 mS/cm weist eine deutliche Frequenzabhängigkeit auf.

In Fig. 5b) ist der Phasenverlauf der Impedanz für verschiedene elektrische Leitfähigkeiten dargestellt. Im Bereich von relativ geringen elektrischen Leitfähigkeiten d.h. zwischen 7,7 µS/cm und 23 µS/cm ist die Phase *ϕ* für Frequenzen der Eingangsspannung zwischen 10 bis 1000 Hz annähernd Null. Bei zunehmender elektrischer Leitfähigkeit des Messstoffs 11 ändert sich aber der Verlauf der Phase *ϕ* aufgrund des zunehmenden Einflusses der Polarisationseffekte. Eine Messung der elektrischen Leitfähigkeit eines Messstoffs 11 nur mittels der stromführenden ersten und zweiten Elektrode kann daher fehlerhaft sein.

Fig. 6a) zeigt eine graphische Darstellung des Betrags der Übertragungsfunktion als Funktion der (Wechselstrom-)Frequenz. Die Übertragungsfunktion wird aus dem Quotienten zwischen der Ausgangsspannung U₃₂ und der Eingangsspannung U₁₀ gebildet. Der Betrag der Übertragungsfunktion in Fig. 6a) ist im gezeigten Frequenzbereich im Wesentlichen unabhängig von der Frequenz der angelegten Eingangsspannung U₁₀. Die vorgeschlagene Bestimmung der elektrischen Leitfähigkeit mittels der Ausgangsspannung U₃₂ ist also gegenüber den aus dem Stand der Technik bekannten Verfahren vorteilhafter, da sie im Wesentlichen unabhängig von der Frequenz eines zwischen der ersten und zweiten Elektrode 4, 19 angelegten Wechselstroms ist.

Zudem ist in Fig. 6b) der Verlauf der Phase *ϕ* der Übertragungsfunktion gezeigt.

In Fig. 7 ist ein Querschnitt durch ein Messrohr 2 einer magnetisch-induktiven Durchflussmesseinrichtung 1 gezeigt. Der Querschnitt zeigt auf Höhe der Messelektroden 4, 5 eine Referenzelektrode 19 und eine Messstoffüberwachungselektrode 20, welche in das Messrohr 2 eingebracht sind. Das Messrohr 2 weist eine Auskleidung und einen Belag gleichmäßiger Dicke *ε* auf. Die Elektroden 4, 5, 19, 20 stehen aufgrund des Belags nicht in direktem Kontakt mit dem Messstoff 11. Der Belag weist eine elektrische Leitfähigkeit auf, welche als ortsunabhängig angenommen wird. Das Verhältnis der elektrischen Leitfähigkeit von Messstoff 11 und der elektrischen Leitfähigkeit des Belags wird mit k bezeichnet. Das Verhältnis k ist dabei durch den formelhaften Zusammenhang *k = σ_{Belag}* / *σ_{Messstoff}* gegeben, wobei *σ_{Belag}* .die elektrische Leitfähigkeit des Belags und *σ_{Messstoff}* die elektrische Leitfähigkeit des Messstoffs ist.

Fig. 8 a), b), c) zeigt die Potentialverteilung entlang eines Querschnitts eines Messrohrs 2 einer magnetisch-induktiven Durchflussmesseinrichtung 1 bei verschiedenen Werten des Verhältnisses k der elektrischen Leitfähigkeit des Belag und des Messstoff. Dabei weist der Belag in Fig. 8 a) die geringste elektrische Leitfähigkeit auf und der Belag in Fig. 8c) die größte elektrische Leitfähigkeit. Aufgrund der elektrischen Leitfähigkeit des Belags erfolgt eine Potentialverschiebung in Abhängigkeit des Wertes der elektrischen Leitfähigkeit. Mit dieser Potentialverschiebung geht auch eine Veränderung des elektrischen Strömungsfeldes einher. Daher kann ein Belag, der sich in dem Lumen oder auf den Elektroden abgesetzt hat, nachgewiesen werden.

Aus einer Simulation der in dem Messrohr 2 vorliegenden Spannungsverhältnisse mittels einer Finite-Elemente-Methode konnten folgende Werte für verschiedene Verhältnisse k bei einer vorgegebenen, konstanten Dicke *ε* des Belags ermittelt werden:

| k | 0,1 | 1 | 10 |
|---|---|---|---|
| Eingangsimpedanz | 9441 | 1329 | 201 |
| Übertragungsfunktion U₃₂/U₁₀ | 0,007 | 0,042 | 0,106 |

Die Eingangsimpedanz Z₁₀ sinkt bei steigender elektrischer Leitfähigkeit des Belags, während der Wert der Übertragungsfunktion zunimmt.

Fig. 9 zeigt eine Darstellung der Eingangsimpedanz Z₁₀ als Funktion des Verhältnisses der Ausgangsspannung U₃₂ zu der Eingangsspannung U₁₀. Entlang einer der gezeigten sog. Isolinien für k==0,1; 0,2; 0,5; 1; 2; 5; 10 besteht ein konstantes Verhältnis zwischen der elektrischen Leitfähigkeit des Messstoffs 11 und der elektrischen Leitfähigkeit des Belags. Die in Figur 9 gezeigte Darstellung ist in vier Quadranten um den Punkt k=1 unterteilbar. Im oberen linken Quadranten ist die elektrische Leitfähigkeit des Messstoffs größer als die des Belags, während im unteren rechten Quadranten die elektrische Leitfähigkeit des Belags größer ist als die des Messstoffs. Ist das Lumen frei von Belag, kann k einen Wert von annähernd eins annehmen. Die Punkte entlang der Isolinien kennzeichnen unterschiedliche Dicken *ε* des Belags. Ist das Lumen des Messrohrs 2 vollständig mit Belag gefüllt, so nimmt das Spannungsverhältnis zwischen Eingangsspannung U₁₀ und Ausgangsspannung U₃₂ einen konstanten Wert an - im gezeigten Ausführungsbeispiel ist U₃₂/U₁₀=0,042. Durch das Diagramm bzw. durch die Werte von Eingangsspannung U₁₀, Eingangsimpedanz Z₁₀ und Ausgangsspannung U₃₂ können also die Dicke *ε* des Belags und/oder das Verhältnis k der elektrischen Leitfähigkeiten bestimmt werden.

Fig. 10 zeigt in einer graphischen Darstellung die Auswirkung eines Belags auf den Messfehler einer magnetisch-induktiven Durchflussmesseinrichtung 1.

Abhängig von der Dicke *ε* und der Leitfähigkeit des Belags müssen aufgrund des daher resultierenden Messfehlers unterschiedliche Korrekturen vorgenommen werden. Für eine Fehlerkorrektur des Messwerts ist daher eine Analyse des Belags von entscheidender Bedeutung.

### Bezugszeichenliste

- 1: Magnetisch-induktive Durchflussmesseinrichtung
- 2: Messrohr
- 3: Messrohrlängsachse
- 4: Erste Elektrode / Messelektrode
- 5: Dritte Elektrode /Messelektrode
- 6: Spulenanordnung/Elektromagnet
- 7: Spulenanordnung/Elektromagnet
- 8: Regel-/Auswerteeinheit
- 9: Eingabe-/Ausgabeeinheit
- 10: Speichereinheit
- 11: Messstoff
- 12: Verbindungsleitung
- 13: Verbindungsleitung
- 14: Verbindungsleitung
- 15: Verbindungsleitung
- 16: Verbindungsleitung
- 19: Zweite Elektrode / Referenzelektrode
- 20: Vierte Elektrode / Messstoffüberwachungselektrode
- 21: Strömungsfeld
- 31: Stromquelle
- 32: Spannungsmesser
- 33: Operationsverstärker
- 34: Spannungsquelle
- Rx1: Vorwiderstand
- Rx2: Widerstand
- Rx3: Widerstand
- R_{M1}: Widerstand Messstoff
- R_{M2}: Widerstand
- R_{M3}: Widerstand
- U: Spannungsabhängiger Widerstand
- CD: Kapazität der Doppelschicht
- CS: Streukapazitäten
- Z₁₀: Eingangsimpedanz
- *ϕ*: Phase
- U₃₂: Ausgangsspannung
- U₁₀: Eingangsspannung
- k: Verhältnis zw. elektrischer Leitfähigkeit des Messstoffs und elektrischer Leitfähigkeit des Belags
- *ε*: Dicke des Belags
- R: Radius des Messrohrs
- σ_{Belag}: Elektrische Leitfähigkeit des Belags
- σ_{Messstoff}: Elektrische Leitfähigkeit des Messstoffs

## Patentansprüche

1. Verfahren zum Betreiben einer magnetisch-induktiven Durchflussmesseinrichtung (1), wobei die magnetisch-induktive Durchflussmesseinrichtung (1) ein Messrohr (2) aufweist, welches Messrohr (2) ein Lumen zum Führen eines zumindest geringfügig elektrisch leitfähigen Messstoffs (11) aufweist,
wobei die magnetisch-induktive Durchflussmesseinrichtung (1) eine erste und
eine zweite mit dem Messstoff(11) elektrisch wechselwirkende Elektrode (4, 19) aufweist,
wobei in einem ersten Diagnosebetrieb eine Eingangsspannung (U₁₀) zwischen der ersten und der zweiten Elektrode (4, 19) angelegt wird, welche Eingangsspannung (U₁₀) einen elektrischen Strom im Wesentlichen innerhalb des Lumens erzeugt,
**dadurch gekennzeichnet,**
**dass** die Durchflussmesseinrichtung (1) ferner eine dritte und eine vierte mit dem Messstoff elektrisch wechselwirkende Elektrode (5, 20) aufweist,
**dass** eine im Wesentlichen aufgrund des elektrischen Stroms zwischen der dritten und der vierten Elektrode (5, 20) abfallende Ausgangsspannung (U₃₂) bestimmt wird, und
**dass** mittels der Ausgangsspannung (U₃₂) ein Zustand der Durchflussmesseinrichtung (1) und/oder eine chemische und/oder physikalische Eigenschaft des Messstoffs (11) bestimmt wird,
und **dass** die Ausgangsspannung (U3₂) in eine Beziehung zu der Eingangsspannung (U₁₀) und/oder einer Eingangsimpedanz (Z₁₀) gebracht wird,
und **dass** mittels der Beziehung ein gegebenenfalls auf einer Innenwand des Messrohrs (2) und/oder auf der ersten, zweiten, dritten und/oder vierten Elektrode (4, 5, 19, 20) vorhandener, insbesondere von dem Messstoff (11) abgeschiedener, Belag detektiert wird,
und **dass** mindestens ein mittels der Beziehung erhaltener Wert mit mindestens einem hinterlegten Wert verglichen wird,
wobei die Leitfähigkeit des Messstoffs (11) und gegebenenfalls die Leitfähigkeit des Belags bestimmt wird,
wobei die Eingangsimpedanz (Z₁₀) zwischen der ersten Elektrode und der zweiten Elektrode vorliegt.

2. Verfahren nach Anspruch 1,
**dadurch gekennzeichnet, dass** die elektrische Leitfähigkeit des Messstoffs (11) oder eine mit der
elektrischen Leitfähigkeit in einem Zusammenhang stehende Größe mittels der Ausgangsspannung (U₃₂) bestimmt wird.

3. Verfahren nach Anspruch 1 oder 2,
**dadurch gekennzeichnet,**
**dass** die zwischen der ersten Elektrode und der zweiten Elektrode angelegte Eingangsspannung (U₁₀). welche zum Einprägen eines im Wesentlichen konstanten elektrischen Stroms dient, bestimmt wird.

4. Verfahren nach Anspruch 1,
**dadurch gekennzeichnet,**
**dass** eine Dicke (ε) des Belags und/oder ein Verhältnis k zwischen der Leitfähigkeit des Messstoffs und der Leitfähigkeit des Belags, insbesondere mittels der Beziehung, bestimmt werden.

5. Verfahren nach einem der vorigen Ansprüche,
**dadurch gekennzeichnet,**
**dass** ein Verhältnis k zwischen der Leitfähigkeit des Messstoffs (11) und der Leitfähigkeit des Belags, bestimmt wird.

6. Verfahren nach einem der vorherigen Ansprüche,
**dadurch gekennzeichnet,**
**dass** die erste, zweite, dritte und vierte Elektrode (4, 5, 19, 20) in einem Messbetrieb zur Messstoffüberwachung und/oder zur Bestimmung des Durchflusses und/oder zur Bestimmung eines Referenzpotentials verwendet werden.

7. Verfahren nach einem der vorherigen Ansprüche,
**dadurch gekennzeichnet,**
**dass** zur Bestimmung des Durchflusses mittels eines Magnetsystems ein Magnetfeld erzeugt wird, durch welches Magnetfeld eine Messspannung in dem das Messrohr (2) durchströmenden Messstoff (11) induziert wird, welche Messspannung mittels der ersten, zweiten, dritten und/oder vierten Elektrode (4, 5, 19, 20) abgegriffen wird.

8. Verfahren nach dem vorherigen Anspruch,
**dadurch gekennzeichnet,**
**dass** von der Durchflussmesseinrichtung (1) erzeugte Messwerte abhängig von dem in dem ersten Diagnosebetrieb ermittelten Verhältnis zwischen der elektrischen Leitfähigkeit des Messstoffs (11) und der elektrischen Leitfähigkeit des Belags, sowie abhängig von der Dicke (ε) des Belags berichtigt werden.

9. Verfahren nach Anspruch 3 oder 4,
**dadurch gekennzeichnet,**
**dass** in einem zweiten Diagnosebetrieb die elektrische Leitfähigkeit des Messstoffs (11) oder die mit der elektrischen Leitfähigkeit in einem Zusammenhang stehende Größe lediglich aus der Eingangsspannung (U₁₀) und/oder Eingangsimpedanz (Z₁₀) bestimmt wird.

## Claims

1. Procedure designed for operating an electromagnetic flow measuring unit (1), wherein said electromagnetic flow measuring unit (1) has a measuring tube (2), said measuring tube (2) having an interior channel for guiding a medium (11) which is at least slightly electrically conductive,
wherein the electromagnetic flow measuring unit (1) has a first and a second electrode (4, 19) that interact electrically with the medium (11),
wherein in a first diagnostic mode, an input voltage (U₁₀) is applied between the first and the second electrode (4, 19), said input voltage (U₁₀) generating an electrical current essentially inside the interior channel,
**characterized in that**
the flow measuring unit (1) further comprises a third and a fourth electrode (5, 20) that interact electrically with the medium,
**in that** an output voltage (U₃₂), which drops essentially because of the electrical current between the third and fourth electrode (5, 20), is determined, and
**in that** a state of the flow measuring unit (1) and/or a chemical and/or physical property of the medium (11) is determined on the basis of the output voltage (U₃₂),
and **in that** the output voltage (U₃₂) is put in relation to the input voltage (U₁₀) and/or an input impedance (Z₁₀),
and **in that** a deposit buildup that may be present on the inner wall of the measuring tube (3) and/or on the first, second, third and/or fourth electrode (4, 5, 19, 20), particularly deposit that is separate from the medium (11), is detected using the relation
and **in that** at least a value obtained with the relation is compared with at least one saved value,
wherein the conductivity of the medium (11) and, where applicable, the conductivity of the deposit is determined,
wherein the input impedance (Z₁₀) is present between the first electrode and the second electrode.

2. Procedure as claimed in Claim 1,
**characterized in that**
the electrical conductivity of the medium (11) or a variable related to the electrical conductivity is determined using the output voltage (U₃₂).

3. Procedure as claimed in Claim 1 or 2,
**characterized in that**
the input voltage (U₁₀) that is applied between the first electrode and the second electrode, and serves to generate an essentially constant electrical current, is determined.

4. Procedure as claimed in Claim 1,
**characterized in that**
a thickness (ε) of the deposit and/or a ratio k between the conductivity of the medium and the conductivity of the deposit is determined, particularly using the relation.

5. Procedure as claimed in one of the previous claims,
**characterized in that**
a ratio k between the conductivity of the medium (11) and the conductivity of the deposit is determined.

6. Procedure as claimed in one of the previous claims,
**characterized in that**
the first, second, third and fourth electrode (4, 5, 19, 20) are used in a measuring mode to monitor medium and/or to determine the flow and/or to determine a reference potential.

7. Procedure as claimed in one of the previous claims,
**characterized in that**
in order to determine the flow using a magnetic system, a magnetic field is generated by means of which a measuring voltage is induced in the medium (11) flowing through the measuring tube (2), wherein said measuring voltage is measured using the first, second, third and/or fourth electrode (4, 5, 19, 20).

8. Procedure as claimed in one of the previous claims,
**characterized in that**
measured values generated by the flow measuring unit (1) are corrected depending on the ratio - determined in the first diagnostic mode - between the electrical conductivity of the medium (11) and the electrical conductivity of the deposit, and depending on the thickness (ε) of the deposit.

9. Procedure as claimed in Claim 3 or 4,
**characterized in that**
in a second diagnostic mode, the electrical conductivity of the medium (11) or the variable related to the electrical conductivity, is determined solely from the input voltage (U₁₀) and/or the input impedance (Z₁₀).

## Revendications

1. Procédé destiné à l'exploitation d'un dispositif de mesure de débit magnéto-inductif (1), le dispositif de mesure de débit magnéto-inductif (1) comprenant un tube de mesure (2), lequel tube de mesure (2) comporte un canal intérieur destiné à guider un produit mesuré (11) au moins légèrement conducteur électriquement, pour lequel le dispositif de mesure de débit magnéto-inductif (1) comporte une première et une deuxième électrode (4, 19) interagissant électriquement avec le produit mesuré (11),
pour lequel, dans un premier mode de diagnostic, une tension d'entrée (U₁₀) est appliquée entre la première et la deuxième électrode (4, 19), laquelle tension d'entrée (U₁₀) génère un courant électrique pour l'essentiel à l'intérieur du canal intérieur,
**caractérisé**
**en ce que** le dispositif de mesure de débit magnéto-inductif (1) comprend en outre une troisième et une quatrième électrode (5, 20) interagissant électriquement avec le produit mesuré,
**en ce qu'**est déterminée une tension de sortie (U₃₂) chutant pour l'essentiel en raison du courant électrique entre la troisième et la quatrième électrode (5, 20), et
**en ce qu'**un état du dispositif de mesure de débit magnéto-inductif (1) et/ou une propriété chimique et/ou physique du produit mesuré (11) sont déterminés au moyen de la tension de sortie (U₃₂),
et **en ce que** la tension de sortie (U₃₂) est mise en relation avec la tension d'entrée (U₁₀) et/ou une impédance d'entrée (Z₁₀),
et **en ce qu'**au moyen de la relation, un dépôt éventuellement présent sur une paroi intérieure du tube de mesure (3) et/ou sur la première, la deuxième, la troisième et la quatrième électrode (4, 5, 19, 20), qui s'est notamment séparé du produit mesuré (11),
et **en ce qu'**au moyen de la relation, au moins une valeur obtenue est comparée avec au moins une valeur enregistrée,
la conductivité du produit mesuré (11) et, le cas échéant, la conductivité du dépôt sont déterminés,
l'impédance d'entrée (Z₁₀) étant présente entre la première et la deuxième électrode.

2. Procédé selon la revendication 1,
**caractérisé**
**en ce qu'**est déterminée, au moyen de la tension de sortie (U₃₂), la conductivité électrique du produit mesuré (11) ou une grandeur en relation avec la conductivité électrique.

3. Procédé selon la revendication 1 ou 2,
**caractérisé**
**en ce qu'**est déterminée la tension d'entrée (U₁₀) appliquée entre la première électrode et la deuxième électrode, laquelle sert à la génération d'un courant électrique pour l'essentiel constant.

4. Procédé selon la revendication 1,
**caractérisé**
**en ce que** sont déterminés une épaisseur (ε) du dépôt et/ou un rapport k entre la conductivité du produit mesuré et la conductivité du dépôt, notamment au moyen de la relation.

5. Procédé selon l'une des revendications précédentes,
**caractérisé**
**en ce qu'**est déterminé un rapport k entre la conductivité du produit mesuré (11) et la conductivité du dépôt.

6. Procédé selon l'une des revendications précédentes,
**caractérisé**
**en ce que** la première, la deuxième, la troisième et/ou la quatrième électrode (4, 5, 19, 20) sont utilisées dans un mode de mesure pour la surveillance du produit mesuré et/ou pour la détermination du débit et/ou pour la détermination d'un potentiel de référence.

7. Procédé selon l'une des revendications précédentes,
**caractérisé**
**en ce que**, pour la détermination du débit au moyen d'un système magnétique, un champ magnétique est généré, champ magnétique à travers lequel une tension de mesure est induite dans le produit mesuré (11) s'écoulant à travers le tube de mesure (2), laquelle tension de mesure est prélevée au moyen de la première, de la deuxième, de la troisième et/ou de la quatrième électrode (4, 5, 19, 20).

8. Procédé selon la revendication précédente,
**caractérisé**
**en ce que** les valeurs mesurées générées par le dispositif de mesure de débit (1) sont corrigées en fonction du rapport - déterminé dans le premier mode de diagnostic - entre la conductivité électrique du produit mesuré (11) et la conductivité électrique du dépôt, ainsi qu'en fonction de l'épaisseur (ε) du dépôt.

9. Procédé selon la revendication 3 ou 4,
**caractérisé**
**en ce qu'**est déterminée, simplement à partir de la tension d'entrée (U₁₀) et/ou de l'impédance d'entrée (Z₁₀), dans un deuxième mode de diagnostic, la conductivité électrique du produit mesuré (11) ou la grandeur en relation avec la conductivité électrique.
